# EUROPÄISCHE PATENTSCHRIFT

(11) **EP 1 706 843 B1**
(45) Veröffentlichungstag und Bekanntmachung des Hinweises auf die Patenterteilung: **05.01.2011**
(21) Anmeldenummer: 05700544.9
(22) Anmeldetag: 14.01.2005
(51) Int. Cl.: G06K 19/077, G06K 19/04, D06F 93/00, H01Q 1/27, E05B 73/00, A41D 1/00

(54) **TEXTILMATERIAL MIT EINEM HF-TRANSPONDER**
TEXTILE MATERIAL COMPRISING AN HF TRANSPONDER
MATERIAU TEXTILE PRESENTANT UN TRANSPONDEUR RF

(30) Priorität: 22.01.2004 DE 102004003461
(43) Veröffentlichungstag der Anmeldung: 04.10.2006
(73) Patentinhaber: ASTRA Gesellschaft für Asset Management mbH & Co. KG, 30890 Barsinghausen (DE)
(72) Erfinder: STOBBE, Anatoli, 30890 Barsinghausen (DE)
(74) Vertreter: Körner, Peter
(86) Internationale Anmeldenummer: PCT/DE2005/000041
(87) Internationale Veröffentlichungsnummer: WO 2005/071605

(56) Entgegenhaltungen:
- WO-A-01/36728
- US-A1- 2003 160 732
- POST E R ET AL: "Smart fabric, or wearable clothing" WEARABLE COMPUTERS, 1997. DIGEST OF PAPERS., FIRST INTERNATIONAL SYMPOSIUM ON CAMBRIDGE, MA, USA 13-14 OCT. 1997, LOS ALAMITOS, CA, USA,IEEE COMPUT. SOC, US, 13. Oktober 1997 (1997-10-13), Seiten 167-168, XP010251560 ISBN: 0-8186-8192-6

## Beschreibung

Die Erfindung betrifft ein Textilmaterial mit einem HF-Transponder nach dem Oberbegriff des Anspruchs 1.

Zur Identifikation von Waren bei Produktion, Logistik, Vertrieb und Reparatur werden zunehmend Transponder eingesetzt, die hinsichtlich Lesbarkeit und Datenvolumen sowie Manipulationssicherheit üblichen Barcodes überlegen sind. Der Einsatz von Transpondern wird auch bei textilen Waren angestrebt, wegen ihres flexiblen Charakters und der Notwendigkeit der Reinigung in heißen und/oder chemisch aggressiven Medien werden aber höhere Anforderungen gestellt.

So darf der Transponder den bestimmungsgemäßen Gebrauch der textilen Waren nicht beeinträchtigen, muss gegen mechanische, thermische und chemische Einflüsse resistent sein und trotzdem physikalisch zuverlässig arbeiten.

Es ist bekannt, Textiletiketten mit Transpondern auszustatten, die im 13 MHz-Bereich arbeiten. Als Antennen dienen M-Feld-Strahler mit kernlosen Spulen, auch als Luftspulen bezeichnet. Die Luftspulen können in Form von Leiterbahnen aus Metall auf Folienträgern ausgeführt sein. Kombinationen aus einer Folienschicht und einer Textilschicht, z. B. als Laminate, sind beim bestimmungsgemäßen Gebrauch und beim Reinigen der textilen Ware meist unverträglich. Die Folie kann sich stellenweise oder ganz lösen und/oder beschädigt werden. Eine direkte Integration einer Luftspule in eine Textilschicht, also ohne Folienträger, ist aber wegen des niederohmigen und schmalbandigen Charakters einer Spulenantenne generell problematisch.

So ermöglicht Sticktechnik zwar die Herstellung einer Spule aus einem durchgehenden elektrisch leitfähigen Faden, die Reproduzierbarkeit der Spulengeometrie und die Stabilität dieser Geometrie bei der bestimmungsgemäßen Benutzung der textilen Ware ist aber sehr gering, so dass die Resonanzfrequenz der Spule nicht zuverlässig auf die Arbeitsfrequenz eingestellt und/oder konstant gehalten werden kann. Dadurch sinkt die Reichweite der Datenübertragung.

Mit Webtechnik kann eine reproduzierbare und stabile Geometrie erzielt werden. Mit derzeit bekannter Technik ist aber eine Spulenantenne aus einem durchgehend elektrisch leitfähiger Faden in der Form einer konzentrischen Spirale nicht realisierbar. Vielmehr müssen Kettfäden und Schussfäden mehrfach miteinander galvanisch verbunden werden, um eine Spulenform in der Form einer konzentrischen Spirale nachzubilden. Die Übergangswiderstände dieser Verbindungen erhöhen die Verluste und vermindern die Spulengüte. Dadurch sinkt ebenfalls die Reichweite der Datenübertragung.

Das Dokument US 2003/160732 A1 offenbart ein Schaltungsmodul und eine damit verbundene Antenne, die auf eine Arbeitsfrequenz abgestimmt ist. Die Antenne ist als E-Feld-Strahler ausgebildet und kann aus eingewebten elektrisch leitfähigen Fadenkonstruktionen des Textilmaterials selbst bestehen.

Der Erfindung liegt die Aufgabe zugrunde, ein Textilmaterial mit einem integrierten HF-Transponder zu schaffen, das eine physikalisch zuverlässig arbeitende Nutzung des Textilmaterials als Antenne ermöglicht

Diese Aufgabe wird bei einem Textilmaterial mit einem HF-Transponder nach dem Oberbegriff des Anspruchs 1 durch die Merkmale dieses Anspruchs gelöst.

Weiterbildungen und vorteilhafte Ausgestaltungen ergeben sich aus den Unteransprüchen.

Durch die Ausbildung der Antenne als E-Feld-Strahler, auch als elektrische Antenne bezeichnet, wird im Nahbereich eine höhere elektrische Komponente des elektromagnetischen Wechselfeldes gebildet, als bei einem M-Feld-Strahler. Der E-Feld-Strahler ist daher hochohmig und nicht so anfällig gegen weniger gut elektrisch leitfähige Materialien und Übergangswiderstände bei Verbindungen. Außerdem ist der E-Feld-Strahler breitbandiger als ein M-Feld-Strahler, so dass größere Toleranzen hinsichtlich Übereinstimmung seiner Resonanzfrequenz mit der Arbeitsfrequenz zulässig sind. Der E-Feld-Strahler ermöglicht so eine Integration in das Textilmaterial, wodurch der Transponder im Gegensatz zu der Ausführung als Folienetikett mit texilfremdem Charakter jetzt bezüglich der Antenne rein textile Eigenschaften annimmt.

Bei einer Arbeitsfrequenz im UHF-Bereich, zugelassen ist hier ein Bereich zwischen 860 MHz und 930 MHz und im Mikrowellenbereich bei ca. 2400 MHz kann ein ungekürzter Halbwellenstrahier eingesetzt werden, sofern die gesamte Fläche der textilen Ware zur Integration der Antenne verfügbar ist. Bei Unterbringung in Textiletiketten ist zumindest im UHF-Bereich eine elektrische Verlängerung des mechanisch verkürzten E-Feld-Strahlers nötig, um seine Resonanzfrequenz auf die Arbeitsfrequenz abzustimmen.

Die elektrisch leitfähigen Bestandteile des Textilmaterials sind elektrisch leitfähige Fadenkonstruktionen, die maschinell innerhalb eines textilüblichen industriellen Fertigungsprozesses verarbeitbar sind.

Durch die Herstellung in einem textilüblichen industriellen Fertigungsprozess gelingt eine kostengünstige Realisierung des E-Feld-Strahlers in einem der Fertigungsschritte, die ohnehin bei der Fertigung des Textilmaterials durchgeführt werden müssen. Die gleichen Qualitätskriterien des textilen Fertigungsprozesses kommen so auch der Qualität und Reproduzierbarkeit des E-Feld-Strahlers zugute. Zwangsläufig wird der E-Feld-Strahler so integraler Bestandteil des Textilmaterials selbst und beeinträchtigt nicht den bestimmungsgemäßen Gebrauch der textilen Ware.

Sofern ein mechanischer verkürzter E-Feld-Strahler in Resonanz mit der Arbeitsfrequenz durch Induktivitäten oder Kapazitäten gebracht werden muss, ist deren Geometrie kompatibel mit dem textilüblichen industriellen Fertigungsprozess gestaltet.

Beim Fertigungsprozess Weben sind Induktivitäten durch Mäander gebildet. Diese sind durch einen durchgehenden elektrisch leitfähigen Schussfaden gebildet, der zwischen jedem Schuss über eine mehreren Schussfadenstärken entsprechende Strecke an der jeweiligen Webkante parallel zu den Kettfäden geführt ist.

Bei der Webtechnik bestehen die größten Einschränkungen der Geometrie, da die leitfähigen Fadenkonstruktionen nur in Richtung der Kettfäden und/oder der Schussfäden verlaufen können. Induktivitäten sind so nicht mit einem durchgehenden Faden realisierbar.

Die elektrisch leitfähige Fadenkonstruktion kann ein mit Metall beschichteter Kunststofffaden, ein mit einem Metalldraht oder eine Metalllitze umwickelter Kunststofffaden, ein Kunststofffaden mit einem integrierten Metalldraht oder einer integrierten Metalllitze oder ein Graphitfaden sein.

Die Auswahl richtet sich danach, welche Art von elektrisch leitfähigen Fäden mit dem jeweiligen Fertigungsprozess verarbeitbar sind, welche Art von elektrisch leitfähigen Fäden ausreichende elektrische Leiteigenschaften aufweisen, auf welche Art eine Kontaktierung mit Anschlüssen des Schaltungsmoduls vorgenommen wird und ob und welche chemischen Einflüsse ausgeübt werden.

Antennenanschlüsse des Schaltungsmoduls können durch Krimpverbindungen, Schweißverbindungen, Lötverbindungen oder Klebeverbindungen mit leitfähigem Kleber mit dem Strahler verbunden sein.

Die Verbindungen sind erforderlich, da beim Fertigungsprozess das Textilmaterial zunächst ohne das Schaltungsmodul gefertigt wird und anschließend das Schaltungsmodul mit dem Strahler verbunden werden muss. Krimpverbindungen haben den Vorteil, dass sie gemeinsam mit dem Anbringen des Schaltungsmoduls den elektrischen Kontakt zwischen den Antennenanschlüssen und den Strahleranschlüssen herstellen. Die Verbindung erfolgt durch mechanische Verspannung und ist daher auch zwischen leitfähigen Materialien möglich, die sich nicht durch Schweißen oder Löten miteinander elektrisch verbinden lassen.

Durch Krimpverbindungen lässt sich das Schaltungsmodul auch gleichzeitig mechanisch am Textilmaterial fixieren, wenn mehrere Fäden umschlossen werden können, die dann gemeinsam für die nötige Zugfestigkeit sorgen. Dies können elektrisch leitfähige und/oder nicht leitfähige Fäden sein.

Schweißverbindungen und Lötverbindungen können zwischen leitfähigen Materialien aus Metallen hergestellt werden. Schließlich sind noch Klebeverbindungen mit leitfähigem Kleber für Materialien möglich, die weder für Krimpverbindungen, Schweißverbindungen und Lötverbindungen geeignet sind. Weiterhin können die Klebeflächen der Klebeverbindungen UV-durchlässig sein und der leitfähige Kleber UV-härtbar sein. Dadurch kann der Kleber durch UV-Bestrahlung im gesamten Klebebereich in kurzer Zeit zum Aushärten gebracht werden.

Vorzugsweise sind das Schaltungsmodul selbst und deren Antennenanschlüsse durch eine Vergussmasse eingeschlossen und die Vergussmasse ist gleichzeitig mit dem dem Schaltungsmodul benachbarten Bereich des Textilmaterials verbunden. Das Schaltungsmodul ist so durch die Vergussmasse am Textilmaterial fixiert, da die Vergussmasse aufgrund der Kapillarwirkung tief in das Textilmaterial eindringt. Eine Trennung ist nur durch Zerstörung möglich, so dass Manipulationen erkennbar sind. Ferner wird durch die Vergussmasse das Schaltungsmodul auch gegen mechanische und chemische Einflüsse geschützt. Die zusätzliche Einbindung der Antennenanschlüsse sorgt für einen Schutz der Kontakte und bietet gleichzeitig eine Zugentlastung der Strahlerenden, wodurch eine Bruchgefahr an den Antennenanschlüssen des Schaltungsmoduls vermindert ist.

Der E-Feld-Strahler kann als symmetrischer Dipol oder als asymmetrischer Stab mit Gegengewicht ausgebildet sein. Der Dipol hat den Vorteil, dass das Schaltungsmodul ohne Anpassungsmaßnahmen am Einspeisepunkt unmittelbar an aufgetrennte leitfähige Materialien angeschlossen werden kann. Allerdings ist bei einem ungekürzten Halbwellen-Dipol der einer halben Wellenlänge der Arbeitsfrequenz entsprechende Längenbedarf für die Anordnung des Strahlers nötig.

Bei einem asymmetrischen Stab mit Gegengewicht reicht hingegen nur ein Viertel der Wellenlänge der Arbeitsfrequenz zur Unterbringung aus, sofern ein ausreichendes Gegengewicht realisierbar ist.

Nachfolgend werden Ausführungsbeispiele der Erfindung anhand der Zeichnung erläutert:
- Fig. 1a - e: zeigen Draufsichten auf Textiletiketten mit E-Feld-Strahlern unterschiedlicher Geometrien und
- Fig. 2a - d: zeigen Querschnitte durch Textiletiketten und Schaltungsmodule mit unterschiedli- chen Verbindungsarten.

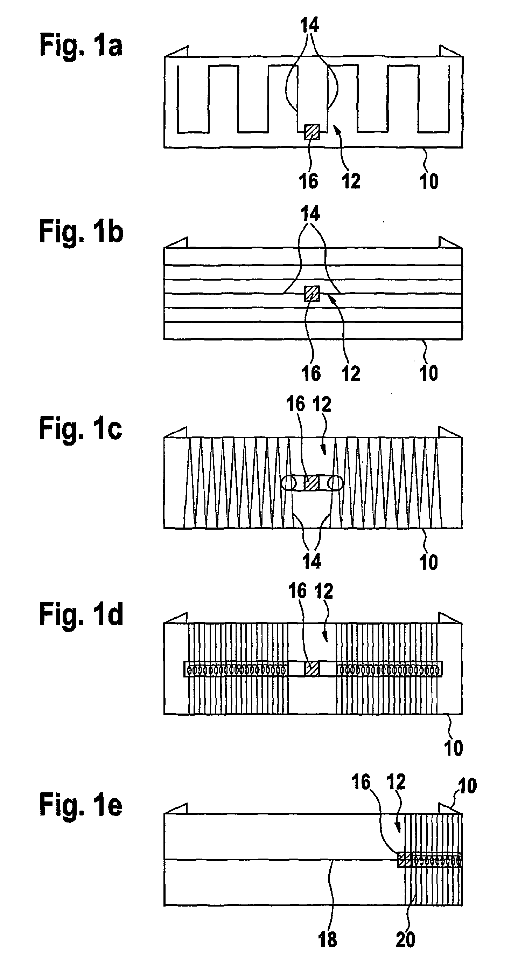

Figur 1a zeigt eine Draufsicht auf ein Textiletikett 10 mit einem Transponder 12, der eine Dipol-Antenne 14 sowie ein an den mittig aufgetrennten Dipol 14 angeschlossenes Schaltungsmodul 16 umfasst. Die geometrische Länge des Dipols 14 ist gegenüber der halben Wellenlänge der Arbeitsfrequenz des Transponders 12 verkürzt und durch induktive und kapazitive Anteile elektrisch verlängert. Realisiert ist dies durch eine mäanderförmige Struktur des elektrischen Leiters der Dipol-Antenne 14. Bei Webtechnik kann dies durch einen durchgehenden elektrisch leitfähigen Faden erreicht werden. Bei Webtechnik ist dies auch durch die Kombination von elektrisch leitfähigen Kettfäden und Schussfäden möglich, die an Kreuzungspunkten miteinander verbunden und im Übrigen von den anderen Bereichen elektrisch isoliert sind.

In Figur 1b ist der Dipol 14 durch einen gestreckten elektrisch leitfähigen Kettfaden gebildet, der in der Mitte aufgetrennt und dort mit seinen Enden mit Anschlüssen des Schaltungsmoduls 16 verbunden ist. An diesen elektrisch leitfähigen Faden sind seitlich weitere Flächenbereiche kapazitiv gekoppelt, die aus durchgehenden elektrisch leitfähigen Fäden bestehen. Diesen bilden einen kapazitiven Belag zur elektrischen Verlängerung des geometrisch gegenüber der halben Wellenlänge der Arbeitsfrequenz des Transponders 12 verkürzten Dipols 14.

In Figur 1c ist der Dipol 14 aus Flächen parallel laufender Schussfäden gebildet ist. In einer Nadelwebmaschine wird ein durchgehender Schussfaden verwendet, so dass die die elektrisch leitfähige Fläche bildenden Schussfäden alle galvanisch miteinander verbunden sind. Daher müssen die Anschlüsse des Schaltungsmoduls 16 nur jeweils an das kalte Ende der Dipol-Teile herangeführt und mit diesen galvanisch verbunden werden.

Bei der Dipol-Antenne 14 nach Figur 1d sind die Schussfäden mit einer Breitwebmaschine erzeugt worden und alle am Ende getrennt. Die Anschlüsse des Schaltungsmoduls 16 sind über elektrisch leitfähige Kettfäden oder flexible Anschlussfahnen zu den Schussfäden geführt und quer über alle Schussfäden der elektrisch leitfähigen Fläche mit diesem galvanisch verbunden.

Figur le zeigt eine asymmetrische Antenne mit einem Stab 18 in Form eines elektrisch leitfähigen Fadens und einem Gegengewicht 20 in Form von quer dazu verlaufenden elektrisch leitfähigen Fäden, die untereinander galvanisch verbunden sind.

Bei Webtechnik werden die örtliche Lage und Größe der Flächen der elektrisch leitfähigen Fäden durch Patronieren und bei den übrigen Techniken durch entsprechende Vorbereitungsstufen festgelegt.

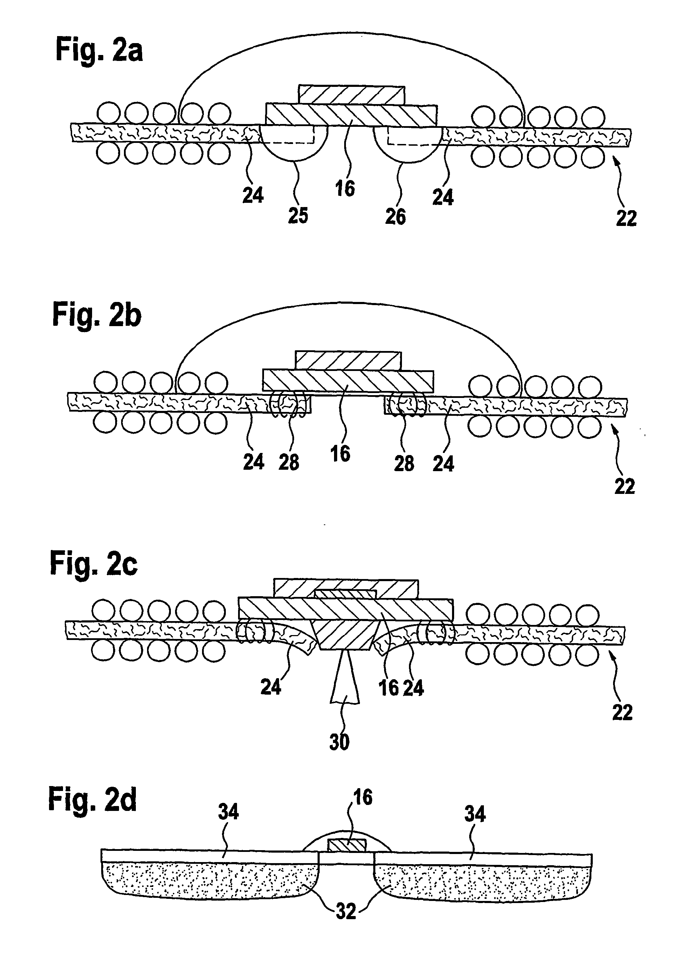

Figur 2a zeigt eine Darstellung eines Querschnitts durch ein Textilmaterial 22 und ein Schaltungsmodul 16 mit Anschlüssen an die elektrisch leitfähigen Fäden 24 einer Dipol-Antenne durch eine leitfähige Klebepaste 26.

In Figur 2b sind Krimpverbindungen 28 vorgesehen, die sich beim Einsetzten des Schaltungsmoduls 16 mechanisch an den elektrisch leitfähigen Fäden 24 festkrallen.

Figur 2c zeigt den Fall, dass das Schaltungsmodul 16 an einen durchgehenden leitfähigen Faden angeschlossen ist, der beim Anschlussvorgang gleichzeitig mittig mittels eines Trennwerkzeugs getrennt wird. Dazu ist am Schaltungsmodul 16 entweder selbst ein Trennmesser angeordnet oder eine Schneidleiste angeordnet zur Bildung eines Gegenstückes für ein von außen herangeführtes Messer 30 oder eine Laserschneidvorrichtung.

Figur 2d zeigt schließlich die Verbindung der Anschlüsse des Schaltungsmoduls 16 mit quer verlaufenden elektrisch leitfähigen Fäden über eine elektrisch leitfähige Klebepaste 32, die auf elastische Träger 34 aufgebracht ist. Hierbei kann es sich um UV-durchlässige Materialien handeln, so dass eine Aushärtung des Klebers mittels UV-Licht möglich ist.

Alternativ sind auch Schweiß- oder Lötverbindungen möglich, wobei als Schweißtechnik Punktschweißen, Ultraschallschweißen oder Laserschweißen geeignet ist.

Die Schaltungsmodule gemäß Fig. 2a-d sind einschließlich ihrer Anschlüsse in Vergussmasse eingegossen und die Vergussmasse ist außerdem in das Textilmaterial eingedrungen und fixiert das Schaltungsmodul sowie schützt es gegen Manipulation.

## Patentansprüche

1. Textilmaterial mit einem HF-Transponder (12), welcher ein Schaltungsmodul (16) und eine damit verbundene Antenne (14; 18, 20) umfasst, die auf eine Arbeitsfrequenz abgestimmt ist, **dadurch gekennzeichnet, dass** die Antenne (14; 18, 20) als E-Feld-Strahler für eine Arbeitsfrequenz im UHF- oder Mikrowellenbereich ausgebildet ist und der E-Feld-Strahler vollständig aus eingewebten elektrisch leitfähigen Fadenkonstruktionen des Textilmaterials selbst besteht, die maschinell innerhalb eines textilüblichen industriellen Fertigungsprozesses verarbeitbar sind, wobei der E-Feld-Strahler ein mechanisch verkürzter E-Feld-Strahler ist, der in Resonanz mit der Arbeitsfrequenz durch Induktivitäten gebracht ist, deren Geometrie kompatibel mit dem textilüblichen industriellen Fertigungsprozess gestaltet ist und dass beim Fertigungsprozess Weben die obengenannten Induktivitäten durch Mäander gebildet sind, die einen durchgehenden elektrisch leitfähigen Schussfaden umfassen, der zwischen jedem Schuss über eine mehreren Schussfadenstärken entsprechende Strecke an der jeweiligen Webkante parallel zu den Kettfäden verläuft.

2. Textilmaterial nach Anspruch 1, **dadurch gekennzeichnet, dass** die elektrisch leitfähige Fadenkonstruktion ein mit Metall beschichteter Kunststofffaden, ein mit einem Metalldraht oder einer Metalllitze umwickelter Kunststofffaden, ein Kunststofffaden mit einem integrierten Metalldraht oder einer integrierten Metalllitze oder ein Grafitfaden ist.

3. Textilmaterial nach Anspruch 1 oder 2, **dadurch gekennzeichnet, dass** Antennenanschlüsse des Schaltungsmoduls (16) durch Krimpverbindungen, Schweißverbindungen, Lötverbindungen oder Klebeverbindungen mit leitfähigem Kleber mit dem Strahler verbunden sind.

4. Textilmaterial nach Anspruch 3, **dadurch gekennzeichnet, dass** Klebeflächen der Klebeverbindungen UV-durchlässig sind und der leitfähige Kleber UV-härtbar ist.

5. Textilmaterial nach einem der Ansprüche 1 bis 4, **dadurch gekennzeichnet, dass** das Schaltungsmodul (16) selbst und deren Antennenanschlüsse durch eine Vergussmasse eingeschlossen sind und die Vergussmasse gleichzeitig mit dem Schaltungsmodul (16) benachbarten Bereich des Textilmaterials verbunden ist zur mechanischen Fixierung des Schaltungsmoduls und/oder Erhöhung der Manipulationssicherheit.

6. Textilmaterial nach einem der Ansprüche 1 bis 5, **dadurch gekennzeichnet, dass** der Strahler als symmetrischer Dipol (14) oder als asymmetrischer Stab (18) mit Gegengewicht (20) ausgebildet ist.

## Claims

1. A textile material having an HF transponder (12), which comprises a circuit module (16) and an antenna (14; 18, 20) connected thereto, which antenna is tuned to a working frequency, **characterised in that** the antenna (14; 18, 20) is formed as an electric field emitter for a working frequency in the UHF or microwave range and the electric field emitter is entirely composed of woven-in, electrically conductive thread structures of the textile material itself, which structures can be mechanically processed within a normal textile industrial manufacturing process, wherein the electric field emitter is a mechanically shortened electric field emitter which is brought into resonance with the working frequency by inductors, the geometry of which is configured to be compatible with the normal textile industrial manufacturing process and **in that**, during the manufacturing process of weaving, the above-mentioned inductors are formed by meanders which comprise a continuous, electrically conductive weft thread which runs between each weft over a distance, which corresponds to several weft thread thicknesses, at the respective selvage parallel to the warp threads.

2. The textile material according to Claim 1, **characterised in that** the electrically conductive thread structure is a plastic thread coated with metal, a plastic thread around which a metal wire or a metal cord is wound, a plastic thread with an integrated metal wire or an integrated metal cord or a graphite thread.

3. The textile material according to Claim 1 or 2, **characterised in that** antenna connections of the circuit module (16) are connected to the emitter by crimp joints, welded joints, soldered joints or adhesive joints with conductive adhesive.

4. The textile material according to Claim 3, **characterised in that** adhesive surfaces of the adhesive joints are UV-permeable and the conductive adhesive is UV-curable.

5. The textile material according to one of Claims 1 to 4, **characterised in that** the circuit module (16) itself and antenna connections thereof are enclosed by a casting compound and the casting compound is simultaneously connected to the region of the textile material adjacent to the circuit module (16) for mechanical fixing of the circuit module and/or improving security against manipulation reliability.

6. The textile material according to one of Claims 1 to 5, **characterised in that** the emitter is formed as a symmetric dipole (14) or as an asymmetric rod (18) with counterweight (20).

## Revendications

1. Matériau textile avec un transpondeur HF (12) comprenant un module de circuit (16) et une antenne reliée à celui-ci (14 ; 18, 20) et accordée sur une fréquence de travail, **caractérisé en ce que** l'antenne (14 ; 18, 20) est formée comme émetteur de champ E pour une fréquence de travail dans la gamme UHF ou des microondes et l'émetteur de champ E est composé entièrement de constructions de fil entrelacées électriquement conductrices du matériau textile lui-même, qui sont machinables dans le cadre d'un processus de fabrication industriel couramment utilisé pour le textile, l'émetteur de champ E étant un émetteur de champ E raccourci mécaniquement, qui est mis en résonance avec la fréquence de travail par des inductances dont la géométrie est conçue pour être compatible avec le processus de fabrication industriel couramment utilisé pour le textile et **en ce que**, dans le processus de fabrication du tissage, les inductances susmentionnées sont formées par des méandres qui comprennent un fil de trame continu électriquement conducteur, qui, entre chaque trame, parcourt une distance correspondant à plusieurs grosseurs de fils de trame le long de la lisière respective parallèlement au fil de chaîne.

2. Matériau textile selon la revendication 1, **caractérisé en ce que** la construction de fil électriquement conductrice est un fil en matière plastique recouvert de métal, un fil en matière plastique enrobé d'un fil métallique ou d'un cordon métallique, un fil en matière plastique avec un fil métallique intégré ou un cordon métallique intégré ou un fil en graphite.

3. Matériau textile selon la revendication 1 ou 2, **caractérisé en ce que** les bornes d'antenne du module de circuit (16) sont reliées à l'émetteur par des connexions serties, des connexions soudées, des connexions brasées ou des connexions collées avec une colle conductrice.

4. Matériau textile selon la revendication 3, **caractérisé en ce que** les surfaces de collage des connexions collées sont transparentes aux UV et la colle conductrice est durcissable aux UV.

5. Matériau textile selon l'une des revendications 1 à 4, **caractérisé en ce que** le module de circuit (16) lui-même et ses bornes d'antenne sont enfermés par une masse de scellement et la masse de scellement est reliée simultanément à la zone du matériau textile voisine du module de circuit (16) en vue d'une fixation mécanique du module de circuit et/ou d'une amélioration de la sécurité de manipulation.

6. Matériau textile selon l'une des revendications 1 à 5, **caractérisé en ce que** l'émetteur est formé comme dipôle symétrique (14) ou comme tige asymétrique (18) avec contrepoids (20).
